# FASCICULE DE BREVET EUROPEEN

(11) **EP 1 908 615 B1**
(45) Date de publication et mention de la délivrance du brevet: **26.06.2013**
(21) Numéro de dépôt: 07117789.3
(22) Date de dépôt: 02.10.2007
(51) Int. Cl.: B60J 5/10, E05F 15/12

(54) **Ouvrant arrière destiné à être rapporté sur un véhicule automobile, ensemble de deux ouvrants arrière**
Hinterer Öffnungsflügel, der für die Anbringung an ein Kraftfahrzeug konzipiert wurde, und Set aus zwei hinteren Öffnungsflügeln
Rear door designed to be added to an automobile, assembly of two rear doors

(30) Priorité: 03.10.2006 FR 0654069
(43) Date de publication de la demande: 09.04.2008
(73) Titulaire: Compagnie Plastic Omnium, 69007 Lyon (FR)
(72) Inventeur: Barral, Denis, 38390 Montalieu Vercieu (FR); Coudron, Philippe, 69300 Caluire & Cuire (FR); Andre, Gerald, 01500 Amberieu en Bugey (FR); Amorin, Guilherme, 01150 Chazey sur Ain (FR); Fillon, Jérôme, 69003 Lyon (FR)
(74) Mandataire: Remy, Vincent Noel Paul

(56) Documents cités:
- EP-A- 1 134 104
- WO-A-03/036008
- WO-A-03/097978
- DE-A1- 10 240 323
- US-A1- 2006 043 763
- US-A1- 2006 082 186

## Description

La présente invention concerne un ouvrant arrière destiné à être rapporté sur un véhicule automobile, et un ensemble de deux ouvrants arrière.

### Etat de la technique

On connaît déjà dans l'état de la technique un tel ouvrant arrière, tel qu'un hayon, comportant des moyens de pivotement, matérialisant un axe de pivotement de l'ouvrant entre une position fermée et une position ouverte. Pour faciliter l'ouverture de l'ouvrant, il est courant d'utiliser, en plus des moyens de pivotement, des moyens d'équilibrage de l'ouvrant, par exemple deux vérins.

On sait par ailleurs que l'on souhaite de plus en plus piloter l'ouverture de l'ouvrant de façon électronique à l'aide de moyens motorisés.

A cet effet, une façon de motoriser l'ouverture de l'ouvrant consiste à prévoir, sur la caisse (ou structure) du véhicule, un moteur d'entraînement des vérins.

Le document US2006/0082186 décrit un exemple de moteur d'entraînement d'un ouvrant.

### Problème posé par cet état de la technique

La difficulté réside dans le fait qu'il est nécessaire de prévoir une caisse spécifique adaptée pour le montage et la fixation du moteur d'entraînement des vérins, d'autant plus que ce moteur est relativement encombrant.

Or, il est intéressant pour un constructeur automobile de proposer l'ouverture motorisée de l'ouvrant de façon optionnelle. Dans le cas où le constructeur propose l'option de motorisation de l'ouvrant, il est alors nécessaire de prévoir deux types de caisse sur la chaîne de montage, à savoir une caisse spécialement adaptée pour recevoir le moteur et une caisse standard.

L'invention propose un ouvrant arrière pouvant être ouvert de façon motorisée, tout en pouvant être monté sur une caisse simple, cette caisse pouvant recevoir à la fois un ouvrant motorisé et un ouvrant à ouverture manuelle.

### Solution technique proposée par l'invention

La présente invention a pour objet un procédé d'assemblage d'un véhicule automobile comportant un ouvrant arrière comportant des moyens de pivotement, matérialisant un axe de pivotement de l'ouvrant sur le véhicule entre une position fermée et une position ouverte, et des moyens motorisés de génération d'un couple moteur autour de l'axe de pivotement de l'ouvrant. le procédé étant tel que défini dans la revendication 1.

### Avantages apportés par l'invention

On notera que « l'ouvrant comporte des moyens motorisés » signifie que ces moyens motorisés bougent avec l'ouvrant par rapport à la caisse lorsque l'ouvrant passe de la position fermée à la position ouverte et vice versa.

Grâce à l'invention, on dispose d'un ouvrant arrière qui intègre directement le moteur nécessaire à son ouverture motorisée, sans avoir à prévoir une caisse spécialement adaptée pour le véhicule. Ainsi, on peut utiliser la même caisse, qu'elle soit destinée à recevoir un ouvrant motorisé ou non, ce qui simplifie la gestion des versions de caisse chez les constructeurs, et donc diminue leur coût.

En outre, comme la caisse est libérée du moteur, elle offre un espace supplémentaire pour d'autres fonctions de l'arrière de caisse ou de l'ouvrant. En particulier, on peut prévoir un toit ouvrant sur le pavillon de la caisse. On gagne également de la place dans l'habitacle, notamment en hauteur. Ce gain d'espace est particulièrement intéressant du point de vue du champ de vision dans le rétroviseur central avant. En effet, on peut prévoir d'installer les moyens motorisés directement dans la partie supérieure de l'ouvrant sans pour autant gêner ce champ de vision, et non plus sous le toit ou dans des parties latérales de la caisse, comme c'était le cas dans l'état de la technique. De façon avantageuse, l'espace libéré dans le haut de la caisse permet de prévoir une vitre plus grande.

Un autre avantage réside dans le fait que les moyens motorisés n'agissent pas directement sur les moyens d'équilibrage de l'ouvrant, si bien que ces derniers peuvent être identiques, que l'on utilise un ouvrant motorisé ou non. Par ailleurs, comme les moyens motorisés agissent directement sur les moyens de pivotement de l'ouvrant, tels que des charnières, et non par l'intermédiaire de vérins, l'espace utilisé par ces moyens motorisés est particulièrement restreint sur l'ouvrant. Ainsi, on simplifie considérablement la motorisation de l'ouvrant. En particulier, il n'est pas nécessaire de prévoir des moyens de guidage de câbles ou des systèmes de bobinage.

On notera également que le fait de prévoir les moyens motorisés sur l'ouvrant rend ces moyens fixes par rapport à l'ouvrant lors de son ouverture, si bien qu'il n'est pas nécessaire de prévoir un espace de sécurité entre les moyens motorisés et l'ouvrant pour leur mouvement relatif. Il en ressort que l'on gagne de l'espace sur l'ouvrant pour assurer d'autres fonctionnalités, telles que du renforcement.

De plus, on dispose grâce à l'invention d'un module arrière, appelé « module hayon », que l'on peut rapporter sur le véhicule, ce module étant déjà équipé des différents organes qu'il supporte, dont les moyens motorisés, ce qui libère la chaîne d'assemblage du véhicule. Sur ce module pré-équipé, les moyens motorisés sont positionnés dans leur position finale d'utilisation sur le véhicule, ou encore pré-positionnés, de façon à avoir une position très voisine de leur position finale, et ainsi minimiser le nombre de manipulations, sur la chaîne principale d'assemblage du véhicule, pour leur positionnement ou leur fixation.

On notera que, selon un mode de réalisation avantageux de ce module, la chaîne de montage ne sera occupée que par des étapes de fixation du hayon et de branchement des moyens motorisés sur le véhicule et non par des étapes de mise en place des moyens motorisés sur le hayon, étapes pouvant être preneuses de temps du fait de manque d'accessibilité du hayon une fois qu'il est rapporté sur le véhicule.

Enfin, on peut noter que les moyens motorisés, ainsi agencés sur l'ouvrant, sont particulièrement accessibles pour assurer leur maintenance et/ou leur réparation.

### Caractéristiques optionnelles

Un ouvrant arrière selon l'invention peut en outre comporter une ou plusieurs des caractéristiques suivantes.
- Les moyens motorisés comprennent un arbre coopérant de façon coaxiale avec les moyens de pivotement. Ainsi, les moyens motorisés peuvent entraîner l'arbre en rotation, autour de l'axe de pivotement de l'ouvrant, cet arbre entraînant lui-même les moyens de pivotement, de façon à ouvrir ou fermer l'ouvrant.
- Les moyens de pivotement comprennent des moyens d'engrenage avec l'arbre, notamment des cannelures, une clavette ou des sections s'encastrant, par exemple des sections polygonales. En utilisant une charnière comprenant par exemple un manchon creux cannelé, coopérant avec l'arbre du moteur, on dispose donc d'une façon particulièrement simple d'entraîner la charnière.
- L'ouvrant comporte une peau intérieure, sur laquelle sont rapportés les moyens de pivotement et les moyens motorisés. La fixation des moyens de pivotement et des moyens motorisés ne pose ainsi pas de problème de retassures ou d'apparence de la partie extérieure de l'ouvrant. En outre, dans le cas où la peau intérieure est en matière plastique, il est particulièrement aisé de la conformer pour recevoir et fixer les moyens motorisés, et en particulier plus aisé que dans le cas où la peau intérieure est en tôle.
- Les moyens motorisés sont logés dans la partie supérieure de l'ouvrant, au-dessus d'une vitre arrière, de façon à libérer le reste de l'ouvrant pour y intégrer d'autres fonctions.
- L'ouvrant comporte en outre des moyens d'équilibrage permettant de maintenir l'ouvrant en position ouverte, ce qui permet de soulager l'effort à fournir par le moteur.
- L'ouvrant comporte des moyens de protection des moyens motorisés, afin de les protéger de grosses projections extérieures.
- L'ouvrant comporte des moyens amovibles de branchement des moyens motorisés sur la caisse du véhicule. De tels moyens permettent de raccorder de façon simple les moyens motorisés à un circuit électrique prévu sur la caisse, en effectuant un simple branchement.

L'invention a également pour objet un ensemble de deux ouvrants arrière pour véhicule automobile, comportant chacun une peau extérieure identique et une peau intérieure identique, caractérisé en ce que seulement le premier ouvrant est tel que défini ci-dessus, le deuxième ouvrant étant destiné à être ouvert de façon manuelle, c'est-à-dire non motorisée.

L'invention a en outre pour objet un procédé d'assemblage d'un véhicule comportant un ouvrant arrière tel que présenté ci-dessus, au cours duquel l'ouvrant arrière est tout d'abord équipé des moyens motorisés, puis est ensuite rapporté sur le véhicule.

### Brève description des figures

L'invention sera mieux comprise à la lecture de la description qui va suivre, donnée uniquement à titre d'exemple et faite en se référant aux dessins dans lesquels :
- la figure 1 est une vue schématique de l'intérieur d'un ouvrant arrière selon l'invention ;
- la figure 2 est une vue en coupe schématique de l'ouvrant arrière de la figure 1, monté sur la caisse du véhicule, sur laquelle les moyens motorisés ne sont pas représentés ; et
- la figure 3 est une vue en perspective de moyens motorisés de l'ouvrant de la figure 1.

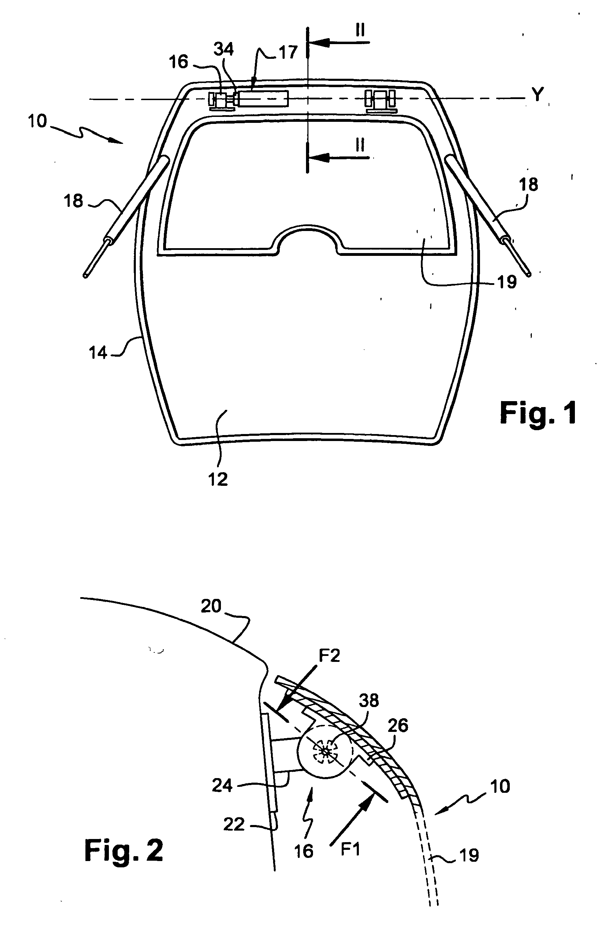

Comme on peut le voir sur la figure 1, un module de hayon, constituant un ouvrant arrière 10 selon l'invention, comporte une peau intérieure 12 en matière plastique (thermodurcissable ou thermoplastique), une peau extérieure 14 en matière plastique (thermodurcissable ou thermoplastique), des moyens de pivotement 16, 16', des moyens motorisés ou moteur 17 pour l'entraînement des moyens 16, des moyens d'équilibrage 18, comprenant deux vérins pour équilibrer l'ouverture de l'ouvrant, et une vitre arrière 19. Les charnières 16, 16', le moteur 17 et les vérins 18 sont rapportés sur la peau intérieure 12.

Les moyens de pivotement 16, 16' matérialisent un axe de pivotement Y de l'ouvrant sur le véhicule, entre une position fermée et une position ouverte. Ils comprennent deux charnières 16, 16'. La charnière 16 est couplée avec les moyens motorisés 17 afin que ces derniers génèrent un couple moteur autour de l'axe de pivotement Y, comme cela va être décrit dans la suite.

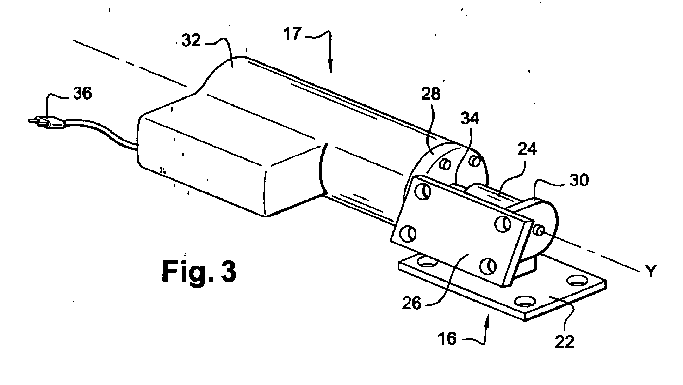

Comme on peut le voir sur la figure 3, la charnière 16 comporte une platine 22, destinée à être immobilisée sur la caisse du véhicule, et un manchon creux 24, comprenant des moyens d'engrenage, constitués de cannelures 38 visibles sur la figure 2, et faisant saillie de la platine 22.

La charnière 16 comporte par ailleurs une platine 26, destinée à être immobilisée sur la peau intérieure 12 de l'ouvrant 10, et deux rondelles 28, 30, faisant saillie de la platine 26, comportant chacune un orifice central.

Les moyens motorisés 17 sont logés dans la partie supérieure de l'ouvrant, au-dessus de la vitre arrière 19. Ils comprennent un corps central 32, un arbre 34 et des moyens amovibles 36 de branchement du moteur 17 sur la caisse 20 du véhicule. Le corps central 32 est contenu dans un boîtier, constituant une protection des moyens motorisés.

La charnière 16 et le moteur 17 coopèrent de la façon suivante. L'arbre 34 est monté à l'intérieur de la charnière, en traversant l'orifice de la rondelle 28, le manchon 24 ainsi que l'orifice de la rondelle 30, de façon à pouvoir coopérer de façon coaxiale, selon l'axe Y, avec la charnière 16. Pour faciliter la coopération, les cannelures 38 du manchon 24 coopèrent avec des cannelures complémentaires ménagées sur l'arbre 34 du moteur.

Le fonctionnement de l'ouvrant arrière va à présent être décrit. Lorsque le moteur 17 est activé, l'arbre 34 est entraîné en rotation, de façon à générer un couple moteur, schématisé par les forces F1 et F2 sur la figure 2, autour de l'axe Y. Grâce aux cannelures 38 ménagées sur le manchon 24, la rotation de l'arbre 34 entraîne la rotation du manchon 24, et par conséquent le pivotement de l'ouvrant 10. Au cours de ce pivotement, l'ouverture est facilitée par les vérins 18.

Selon un aspect avantageux de l'invention, on dispose d'un ensemble de deux ouvrants arrière, le premier étant identique à l'ouvrant arrière 10, et le second n'étant pas muni de moyens motorisés, c'est-à-dire qu'il comporte deux charnières similaires à la charnière 16'. Ainsi, l'invention permet de monter aisément les moyens motorisés de façon optionnelle sur l'ouvrant 10, puisqu'il suffit de monter, sur un ouvrant sans option, la charnière 16 associée au moteur 17, sans avoir à modifier le reste de l'ouvrant.

On notera enfin que l'invention n'est pas limitée au mode de réalisation précédemment décrit.

Parmi les avantages de l'invention, on notera que l'utilisation de peaux intérieure et extérieure en matière plastique permet d'alléger l'ouvrant, si bien que les moyens motorisés ci-dessus nécessitent moins d'énergie.

On notera par ailleurs que l'ouvrant 10 peut être rapporté sur le véhicule sous forme de module pré-équipé, sur lequel les moyens motorisés 17 ont préalablement été rapportés sur l'ouvrant. Ainsi, les moyens 17 sont montés sur l'ouvrant en dehors de la chaîne de montage du véhicule (éventuellement dans une autre usine), ce qui est plus facile à mettre en oeuvre que lorsque l'ouvrant est déjà rapporté sur le véhicule, et donc peu accessible, particulièrement autour de son axe de pivotement.

## Revendications

1. Procédé d'assemblage d'un véhicule comportant un ouvrant arrière, l'ouvrant arrière (10) comportant des moyens de pivotement (16, 16'), matérialisant un axe de pivotement de l'ouvrant sur le véhicule entre une position fermée et une position ouverte, et des moyens motorisés (17) de génération d'un couple moteur autour de l'axe de pivotement (Y) de l'ouvrant logés dans la partie supérieure de l'ouvrant, au-dessus d'une vitre arrière (19), procédé au cours duquel l'ouvrant arrière est déjà équipé de différents organes dont les moyens motorisés, de facon à disposer d'un module arrière pré-équipé, les moyens motorisés étant positionnés sur ce module pré-équipe dans leur position finale d'utilisation sur le véhicule ou exerce pré-positionnés, de façon à avoir une position très voisine de leur position finale, puis à est ensuite rapporté sur le véhicule.

2. Procédé selon la revendication 1, au cours duquel les moyens motorisés (17) comprennent un arbre (34) coopérant de façon coaxiale avec les moyens de pivotement (16).

3. Procédé selon la revendication 2, au cours duquel les moyens de pivotement (16) comprennent des moyens d'engrenage (38) avec l'arbre (34), notamment des cannelures, une clavette ou des sections s'encastrant, par exemple des sections polygonales.

4. Procédé selon l'une quelconque des revendications 1 à 3, au cours duquel l'ouvrant arrière comporte une peau intérieure (12), sur laquelle sont rapportés les moyens de pivotement (16, 16') et les moyens motorisés (17).

5. Procédé selon la revendication 4, dans lequel la peau intérieure est en matière plastique.

6. Procédé selon l'une quelconque des revendications 1 à 5, au cours duquel l'ouvrant arrière comporte en outre des moyens d'équilibrage (18) permettant de maintenir l'ouvrant en position ouverte.

7. Procédé selon l'une quelconque des revendications 1 à 6, au cours duquel l'ouvrant arrière comporte des moyens de protection des moyens motorisés.

8. Procédé selon l'une quelconque des revendications 1 à 7, au cours duquel l'ouvrant arrière comporte des moyens amovibles (36) de branchement des moyens motorisés sur la caisse (20) du véhicule.

## Patentansprüche

1. Verfahren zum Zusammenfügen eines Fahrzeugs, das eine hintere Öffnungsklappe aufweist, wobei die hintere Öffnungsklappe (10) Schwenkmittel (16, 16') aufweist, die eine Schwenkachse der Öffnungsklappe an dem Fahrzeug zwischen einer geschlossenen Position und einer offenen Position bilden, und Antriebsmittel (17) zum Erzeugen eines Antriebsmoments, um die Schwenkachse (Y) der Öffnungsklappe, die in dem oberen Teil der Öffnungsklappe oberhalb einer Heckscheibe (19) untergebracht sind, wobei bei dem Verfahren in dessen Verlauf die hintere Öffnungsklappe bereits mit unterschiedlichen Organen, darunter die Antriebsmittel, derart versehen ist, dass ein vorausgerüstetes Heckmodul bereitgestellt wird, wobei die Antriebsmittel an diesem vorausgerüsteten Modul in ihrer Nutzungsposition an dem Fahrzeug positioniert oder auch derart vorpositioniert sind, dass sie eine Position sehr nahe ihrer Endposition haben, und dann an dem Fahrzeug angebaut wird.

2. Verfahren nach Anspruch 1, in dessen Verlauf die Antriebsmittel (17) eine Welle (34) aufweisen, die koaxial mit den Schwenkmitteln (16) zusammenwirkt.

3. Verfahren nach Anspruch 2, in dessen Verlauf die Schwenkmittel (16) Mittel zum Eingreifen (38) mit der Welle (34) aufweisen, insbesondere Rillen, einen Keil oder Abschnitte, die sich ineinander verschachtelten, zum Beispiel vieleckige Abschnitte.

4. Verfahren nach einem der Ansprüche 1 bis 3, in dessen Verlauf die hintere Öffnungsklappe eine Innenverkleidung (12) aufweist, an welche die Schwenkmittel (16, 16') und die angetriebenen Mittel (17) angebaut sind.

5. Verfahren nach Anspruch 4, bei dem die Innenverkleidung aus Kunststoff besteht.

6. Verfahren nach einem der Ansprüche 1 bis 5, bei dem die hintere Öffnungsklappe ferner Ausgleichsmittel (18) aufweist, die es erlauben, die Öffnungsklappe in geöffneter Position zu halten.

7. Verfahren nach einem der Ansprüche 1 bis 6, in dessen Verlauf die hintere Öffnungsklappe Schutzmittel der Antriebsmittel aufweist.

8. Verfahren nach einem der Ansprüche 1 bis 7, in dessen Verlauf die hintere Heckklappe abnehmbare Mittel (36) zum Anschließen der Antriebsmittel an die Fahrzeugkarosserie (20) des Fahrzeugs aufweist.

## Claims

1. A method of assembling a vehicle including a rear door, the rear door (10) including pivot means (16, 16') embodying a pivot axis for pivoting the door on the vehicle between a closed position and an open position, and motor means (17) for generating a driving torque about the pivot axis (Y) housed in the top portion of the door, above a rear window (19), in the method the rear door is already fitted with various members including the motor means, so as to have a prefitted module, the motor means being positioned on the prefitted module in their final position for use on the vehicle, or else prepositioned so as to be in a position very close to their final position, and is subsequently fitted to the vehicle.

2. The method according to claim 1, in which the motor means (17) comprise a shaft (34) co-operating with the pivot means (16) on the axis thereof.

3. The method according to claim 2, in which the pivot means (16) include means (38) for meshing with the shaft (34), in particular fluting, a key, or interfitting sections, e.g. polygonal sections.

4. The method according to any one of claims 1 to 3, in which the rear door includes an inside skin (12) on which the pivot means (16, 16') and the motor means (17) are fitted.

5. The method according to claim 4, in which the inside skin is of plastic material.

6. The method according to any one of claims 1 to 5, in which the rear door further includes balancing means (18) enabling the door to be held in the open position.

7. The method according to any one of claims 1 to 6, in which the rear door includes protection means for protecting the motor means.

8. The method according to any one of claims 1 to 7, in which the rear door includes releasable connection means (36) for electrically connecting the motor means to the body (20) of the vehicle.
